Europäisches Patentamt

(19) European Patent Office

Office européen des brevets

(11) Publication number: **0 069 173**
**B1**

(12) **EUROPEAN PATENT SPECIFICATION**

(45) Date of publication of patent specification: **08.04.87**

(51) Int. Cl.⁴: **G 01 F 1/36**

(21) Application number: **81302921.2**

(22) Date of filing: **29.06.81**

(54) **Method and apparatus for measuring and controlling volumetric flow rate of gases in a line.**

| | |
|---|---|
| (43) Date of publication of application:<br>**12.01.83 Bulletin 83/02** | (73) Proprietor: **BADGER METER, INC.**<br>**4545 West Brown Deer Road**<br>**Milwaukee Wisconsin 53223 (US)** |
| (45) Publication of the grant of the patent:<br>**08.04.87 Bulletin 87/15** | (72) Inventor: **Kennedy, Lyn Richards**<br>**2705, Whitewood Drive**<br>**Dallas Texas 75233 (US)** |
| (84) Designated Contracting States:<br>**DE GB NL** | (74) Representative: **Dealtry, Brian et al**<br>**Eric Potter & Clarkson 14, Oxford Street**<br>**Nottingham NG1 5BP (GB)** |
| (56) References cited:<br>**US-A-3 744 306**<br>**US-A-4 285 245**<br><br>**REVIEW OF SCIENTIFIC INSTRUMENTS**<br>**volume 39, 1968 NEW YORK (US) W.**<br>**BRENNEN, R.L. BROWN: "Measurement of Gas**<br>**Flow Rate by the method of Timing a Pressure**<br>**drop", pages 608-609** | (56) References cited:<br>**REVIEW OF SCIENTIFIC INSTRUMENTS**<br>**volume 43, no. 2, February 1972 NEW YORK**<br>**(US) D.J. BOGAN et al.: "An Ozone Flow**<br>**Metering System", pages 348-349**<br>**INSTRUMENTS & AUTOMATION, volume 27,**<br>**no. 3, March 1954 R.F. MAHOOD et al.: "Use of**<br>**Capillary Tubing for Flow Measurement",**<br>**pages 460-461** |
| The file contains technical information<br>submitted after the application was filed and<br>not included in this specification | |

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

## Description

This invention relates to a method and means for measuring and controlling the volumetric flow rate of gases, and especially for delivering gases at selected and measured volumetric flow rates.

There are many situations in which it is required that gas be delivered through a line at a constant and known flow rate. Various types of chromatography apparatus have this requirement.

Other examples may be seen in the methods and apparatuses disclosed in Clingman Canadian Letters Patent Nos. 954,719; 1,083,381; Canadian Application No. 277,388; and United States Letters Patent Nos. 3,777,562; 4,062,236; 4,125,018; and 4,125,123. Generally speaking, these methods and equipment measure the calorific value of a gaseous fuel by causing the fuel to be delivered to a combustion system at a flow rate which maximizes the adiabatic flame temperature. The volumetric flow rate at ambient conditions must be accurately determined in these methods and equipment because it is a component in the determination of calorific value. The measurement of volumetric flow rate must be made independently of temperature, pressure, and gas compositions. The last of these requirements, independence from gas composition, is particularly important in such methods and equipment, because they are employed in situations where the gas composition can vary continually and is not known in advance of the making of the measurement. Thus the flowmeter, of whatever kind employed, cannot be calibrated for a particular gas composition, as is possible for some other gas flow measurement situations. The flow measurement must also be reproducible within one part per thousand.

The conditions and requirements outlined above are not well met by the commonly used methods of flow measurement or control. Orifice meters and other methods which depend on measurement of the pressure drop across a flow restriction are sensitive to gas density, which is a function of temperature, pressure, and gas composition. Hot wire flow meters are sensitive to gas properties. Axial flow turbine flow meters are relatively free from sensitivity to gas composition, but contain moving parts which are subject to wear, causing maintenance problems and making recalibration work necessary at intervals as the wear occurs.

U.S. Patent No. 3,125,881 to Peters et al shows a flow measurement system for liquid in which the time required for a predetermined volume of liquid to flow into a tank is measured to determine flow rate. Following each such measurement, the liquid is drawn from the tank more rapidly than it enters it, to empty the tank in readiness for the next measurement.

U.S. Patent No. 3,500,826 to Haire controls the feed of gas from a high pressure supply to a low pressure receiver from which it is withdrawn at uneven rates (as in an oxygen mask receiver) by sensing the pressure in the receiver and utilizing the sensed value to control the setting of a valve between the supply and the receiver.

U.S. Patent No. 3,878,376 to Sholes et al utilizes a computer to direct the actuation of valves in high pressure, atmospheric pressure and vacuum lines connected to a closed pressured volume of gas to adjust the pressure therein in response to signals from a pressure transducer sensing the pressure in the volume.

U.S. Patent No. 3,665,959 to Castillon shows a flow meter using a sonic nozzle so that advantage may be taken of the circumstance that flow rate through such a nozzle is solely a function of absolute temperature and pressure upstream of the nozzle, both of which parameters being measured to obtain the flow rate.

U.S. Patent No. 3,633,416 to Van Dyke et al and U.S. Patent No. 4,096,746 to Wilson et al show systems utilizing diaphragm actuated devices to control pressure, flow, or both.

U.S. Patent No. 3,970,472 to Jones et al shows a flow measurement system using a rotometer type flowmeter in conjunction with an upstream regulator.

The article "An Ozone Flow Metering System" by D. J. Bogan, C. W. Hand, and R. H. Obenauf, Jr.—The Review of Scientific Instruments Volume 43, Number 2, February 1972, pages 348, 349—discloses an apparatus for measuring the amount of ozone gas flowing to a required use. The apparatus does not however disclose any means for imposing a uniformity of flow on the gas flow which is provided by the present invention.

The article "Use of Capillary Tubing for Flow Measurement" by R. F. Mahood and R. Littlefield—Instruments and Automation Vol. 27, Number 3, 1954, Pages 460, 461—discloses the use of a capillary tube for metering the flow of a gas. However such systems are described as useful only where accuracy of flow and pressure drop are not critical (see page 460 item (5)). Thus the use of capillary tubing will not alone provide a uniformity of gas flow at a desired rate as provided by the present invention.

The article "Measurement of Gas Flow Rate by the method of timing a pressure drop" by W. Brennen and Robert L. Brown—Review of Scientific Instruments, Vol. 39, 1968, pages 608, 609—discloses apparatus including a gas flow line including a closable valve at an upstream location and a needle valve at a downstream location. Located between the closable valve and needle valve is a chamber of fixed volume. The apparatus is used to measure gas flow by closing the closable valve and then timing the pressure drop in the chamber. Prior to closure of the closable valve, the needle valve is used to set the flow of gas through the system. The apparatus disclosed in this article does not disclose any means for imposing a uniformity of flow on the gas flow which is provided by the present invention.

According to the present invention there is provided a method of determining the volumetric flow rate of a gas flowing in a line and/or of delivering a gas through a line to a point of use at a measured volumetric flow rate comprising:

passing the gas through said line and into and out of a chamber of fixed volume interposed in said line between selected upstream and downstream points;

temporarily restricting flow of tha gas in said line at said upstream point, said temporary restriction occupying a selected time interval, improving uniformity of flow rate by flow restriction means at said downstream point; and

measuring the rate of fall of pressure in the portion of said line lying between said upstream and downstream points during at least a portion of the duration of said temporary restriction to obtain a measurement of the volumetric rate of flow, characterised in that the method further comprises:

imposing a desired constant flow rate on said gas at the said downstream point in said line by comparing the measured rate of fall of pressure with a desired rate of fall of pressure and adjusting the flow restriction means in response to any deviation between the desired and measured flow rate.

Additionally according to the present invention there is provided apparatus for determining the volumetric flow rate of a gas flowing in a line and/ or for delivering gas through this line to a point of use at a measured volumetric flow rate comprising:

flow restriction means for improving uniformity of flow rate on said gas at a downstream point in said line;

upstream valve means for temporarily restricting gas flow in said line at an upstream point;

a chamber of fixed volume interposed in said line between said upstream and downstream points;

means for measuring the rate of pressure fall in said line downstream from said upstream point during at least part of the time said gas flow is restricted by said upstream valve means, characterised in that the apparatus further includes means for comparing the measured rate of pressure fall with a desired rate of pressure fall and in that the means for improving uniformity of flow rate is able to establish and maintain a constant flow rate by adjusting the volumetric flow rate downstream from the means for measuring the rate of pressure fall in said line in response to any deviation between a desired and the measured flow rate.

Thus in accordance with the present invention, methods and apparatus are provided for measuring and controlling the volumetric flow rate of gas flowing in a line, which are not sensitive to pressure, temperature, or gas composition. In the methods and apparatus the gas flowing in a line is flowed through equipment which imposes a constancy or uniformity of flow downstream through the line even though the pressure in the line on the upstream side of that equipment varies. At a point in the line some distance upstream from the flow uniformity devices a valve means is provided for periodically restricting flow in the line at that point. Preferably the periodic restriction is complete, i.e. the valve means is completely closed to cause an interruption in flow through the valve means. If the restriction is less than complete, the rate of pressure fall used as a flow measurement parameter, as discussed below, is more difficult to detect.

Upon operation of the upstream valve means to restrict or interrupt flow, the pressure in the line between the valve means and the flow uniformity devices starts to fall, because downstream flow is maintained constant, while flow at the upstream valve means is restricted or interrupted. The volume in the line remains constant, the quantity of gas is depleted at a constant or uniform rate, and the pressure falls as a consequence. The rate of fall of pressure is proportional to the rate of flow, and in accordance with the invention is measured by sensing the pressure at the beginning and the end of a time increment, and dividing the pressure drop by the time increment. Time increments of equal length may be used from measurement to measurement, or pressure drops of equal size may be used from one measurement to the next. In the latter case, the length of a time increment is inversely proportional to the rate of flow.

As indicated above a fixed volume measurement chamber is inserted into the line so that longer time increments for measuring pressure drop may be employed and long cycles of flow measuring may be utilized.

Preferably, the line and/or chamber is or are constructed and arranged to effect good heat transfer between the gas and the ambient. The pressure sensing means may be arranged to actuate the timing means at a first selected pressure and to deactivate the timing means at a second selected lower pressure to produce a timing signal inversely proportional to volumetric flow rate. The timing means can be arranged to actuate the pressure sensing means at two points in time following restriction of the gas flow by the upstream valve means. The upstream valve means can be arranged to temporarily interrupt the gas flow.

The means for imposing uniformity of flow rate preferably comprise a flow restriction in the line and a pressure regulator upstream of the flow restriction for maintaining the pressure of gas entering the restriction. The restriction can be a capillary or part of a piece of downstream equipment. The pressure setting of the pressure regulator can be altered by adjustment means to alter the flow rate in the line. The apparatus may comprise means responsive to the measuring means for altering the characteristics of the means for imposing uniformity of flow to change the flow rate at which uniformity is imposed.

From the foregoing, it can be seen that the equipment aspects of the invention are quite simple. In the basic form of the apparatus there is preferably provided a line, (with a measurement chamber, if desired) one or more flow uniformity devices downstream in a line, an upstream valve means for repeatedly interrupting or restricting flow, means for detecting and timing the pressure ·drop, and for dividing the pressure drop by the time increment to produce a rate signal proportional to flow rate. The rate signal may be displayed and/or recorded. It is used, alone or in conjunction with other equipment, to actuate and control equipment, such as one or more of the downstream flow uniformity devices for altering the flow rate.

Preferably, the pressure sensor is a transducer producing an electrical output, and electrical techniques, including either analogue or digital techniques are used to time the measuring intervals, perform the rate of pressure fall calculation, cycle the valve means, and generate control and display signals.

The methods and apparatus of the invention are not sensitive to temperature and pressure level or to gas properties such as density or composition. The apparatus involves no critical moving parts, such as are involved in a turbine meter. Wear in the only moving part of importance, the upstream interrupter valve, is of no consequence until it reaches a point where a leak develops.

If operating conditions or the nature of the gas are such that the supercompressibility of the flowing gas should be taken into account in determining the rate of pressure fall, and in turn, the flow rate, a modification of the basic method of the invention may be employed. No hardware modifications are involved, although the programming of the control equipment may be changed. In accordance with the modification, during a single flow interruption or restriction rate of pressure fall is determined at two separate time increments. The two rates are compared. If they are the same, the effect of supercompressibility is inconsequential. If they differ, then a supercompressibility correction factor proportional to the size of the difference is applied to the flow rate signal.

From the foregoing it can be seen that the objects of the invention include the provision of methods and apparatus for measuring and controlling the volumetric flow rate of a gas flowing in a line which are simple, reliable, and insensitive to ambient pressure and temperature, as well as gas properties, and insensitive to wear of parts.

The manner in which the foregoing objects and purposes, as well as others, are accomplished may best be understood from a consideration of the detailed description which follows, together with the accompanying drawings.

Fig. 1 is a diagrammatic illustration of an apparatus for measuring and controlling volumetric flow rate constructed in accordance with the invention;

Fig. 2 is a plot of pressure against time in tha measurement apparatus of Fig. 1 when operated in accordance with the basic method of the invention; and

Fig. 3 is a plot of pressure against time in the measurement apparatus of Fig. 1 when operated in accordance with a modified method of the invention.

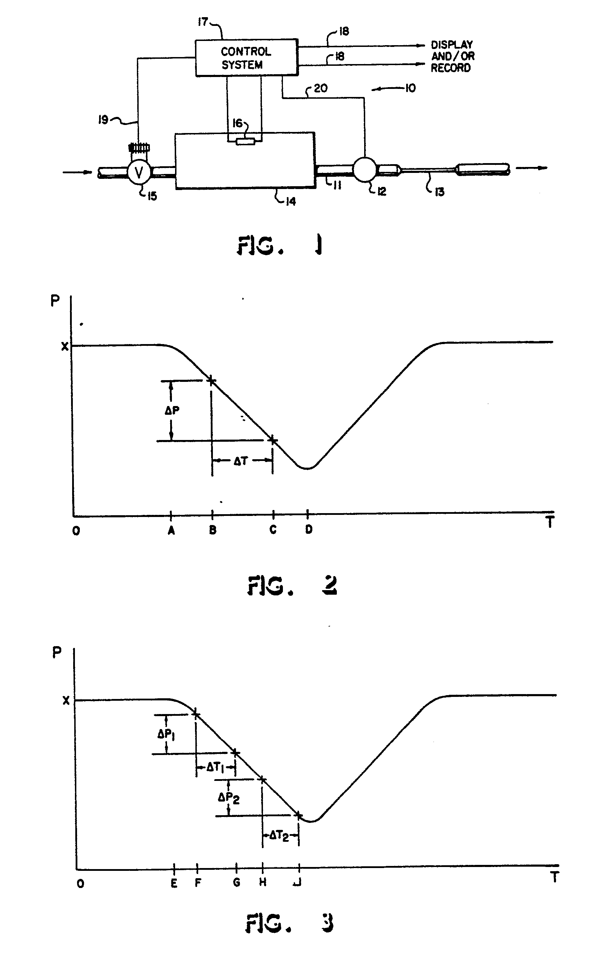

In Fig. 1, the measuring apparatus of the invention is designated generally as 10. It is shown in association with a gas flow line 11, through which gas is delivered from left to right as Fig. 1 is drawn. The equipment includes flow uniformity devices, which in the preferred embodiment comprise a pressure regulator 12 and capillary 13, both of which are located in line 11, with the pressure regulator upstream of the capillary.

Upstream in line 11 from the pressure regulator 12 is flow measurement chamber 14. The chamber is preferably of fixed volume, and represents a local enlargement of the volume of the line 11. Line 11 itself between pressure regulator 11 and upstream valve means 15 (discussed below) may be considered a limiting case of the flow measurement chamber.

Also positioned in line 11, at a point upstream from the measurement chamber, is upstream valve means 15, although as explaimed above it may be arranged to restrict rather than fully interrupt flow in line 11. In the preferred embodiment valve means 15 is a solenoid controlled valve, although other types of valve, such as a rotary valve which opens and closes as it rotates, may be used.

A pressure sensor 16 is mounted in chamber 14. In the preferred embodiment sensor 16 is a strain gauge type sensor with an electrical output, i.e., it is a pressure transducer, but other types of pressure sensors or transducers may be employed if desired.

Transducer 16 is connected to control system 17. In the preferred embodiment, this is an electrical system utilizing conventional switching techniques to operate the equipment in accordance with the methods of the invention. If desired, the control system may employ conventional solid state microprocessor techniques. If so, it may include items such as an electronic timing device or clock, an analog-to-digital converter, output signal amplifiers, storage memory for the control program, an arithmetic unit for dividing a time signal into the signal resulting from the subtraction of two pressure signals, and the like.

Output signals from control system 17 are fed through lines 18 to display and/or recording means of any desired type. Line 19 connects the control system to solenoid valve 15 for carrying signals which effectuate its opening and closing.

The equipment as described thus far comprises the basic flow measurement apparatus of the invention. If it is desired to employ the apparatus to control the flow rate, in the sense of altering it in response to information gained in the measurement apparatus, control system 17 may be connected by line 20 to flow rate altering means which may, for example, comprise the adjustable parts of pressure regulator 12. As another example, the flow altering means may comprise a motorized valve interposed in line 11 between regulator 12 and capillary 13.

The purpose of the flow uniformity devices 12 and 13 is to create a set of pressure conditions downstream of measurement chamber 14 such that a uniformity or constancy of flow out of chamber 14 is imposed throughout a measurement cycle, even though the pressure in the chamber varies during the cycle. The set of devices employed in the preferred embodiment accomplishes this well. Capillary 13 imposes a flow restriction of such magnitude that flow through it will be essentially constant if the pressure at its inlet is constant. Pressure regulator 12 imposes this constancy. It should be noted that the constancy or uniformity sought by the use of the flow uniformity devices is not uniformity in absolute value, since it is contemplated that the absolute flow rate will vary with time, but rather uniformity during a measurement cycle, at whatever flow rate existed just prior to commencement of that cycle.

While the preferred embodiment employs capillary 13 as a flow restriction, other flow restricting devices may be employed. Furthermore, the flow restriction may be part (or all) of a piece of downstream equipment, such as a gas analyser or instrument for determining the calorific value of fuel gas, and in that downstream equipment may be in the form of a capillary, or in another form.

The purpose of the pressure regulator 12, as mentioned above, is to provide a constant pressure upstream of the restriction. This assures a constant molar flow out of chamber 14, even though the pressure in that chamber is varying during the course of a cycle, first falling and then rising. In the preferred embodiment the pressure regulator is a Model 8286 manufactured by Poeter Instrument Co., but other conventional pressure regulators may be used.

The operation of the apparatus of Fig. 1, and the method aspects of the invention may be understood by considering Fig. 1 together with Figs. 2 and 3. The initial condition is that valve 15 is open and gas is flowing through line 11 from left to right in Fig. 1, under the influence of pressure existing or applied in line 11 upstream from apparatus 10. This initial condition is represented in Fig. 2 by the horizontal line extending from time "O" to time "A" at a pressure value of "X".

At time "A" the control system actuates valve 15 to close it. The supply of gas in chamber 14 starts to fall, as gas continues to flow uniformly out of it through pressure regulator 12 and capillary 13. As the quantity of gas decreases its pressures decreases below the value "X", this phenomenon being shown on Fig. 2 by the downwardly sloping portion of the line representing pressure.

At time "B", the control system 17 causes a pressure reading to be taken by pressure transducer 16, and a time reading to be taken on the clock internal in system 17, to obtain respectively $P_1$ and $T_1$. At time C, another set of pressure and time readings $P_2$ and $T_2$ are taken. Control system 17 then subtracts and divides the readings to obtain the rate of pressure fall, whose value is $P_1—P_2/T_2—T_1$. This value, in accordance with the invention, is substantially proportional to the steady state flow rate, i.e., the volumetric flow rate between "O" and time "A" at ambient conditions.

At time "D" control system 17 actuates valve 15 to reopen it, and the pressure in chamber 14 climbs back to the value "X".

If the apparatus of Fig. 1 is being used to control flowrate as well as measure it, and if the flow rate measured in the manner just described is not the desired flow rate, control system 17 sends a signal through line 20 to pressure regulator 12 to change its setting in a direction tending to establish the desired flow rate.

It is important to have good heat transfer from the environment to the gas in the measurement chamber. For the value of $(\Delta P/\Delta T)$ to be strictly proportional to the flow rate, the temperature of the gas must be constant. Without good heat transfer expansion and compression of gas in the chamber can change its temperature in a cyclic manner. This heat transfer is achieved primarily by having a high surface to volume ratio in the measurement chamber. Chamber 14 may be provided with surface fins to improve heat transfer, if desired.

In an altered form of the method of the invention, two independent measurements are made using the apparatus shown in Fig. 1, which is illustrated in Fig. 3. During a first time increment, $\Delta T_1$, (between times "F" and "G") a pressure change, $\Delta P_1$, is measured. During a second and subsequent time increment, $\Delta T_2$, (between times "H" and "J") the pressure change, $\Delta P_2$, is measured. The two rates of pressure change $(\Delta P_1/\Delta T_1)$ and $(\Delta P_2/\Delta T_2)$, are observed and compared. If they are the same, then the flow rate is proportional to $(\Delta P_1/\Delta T_1)$. If the two rates are different, then the flow rate measurement is corrected for the supercompressibility of the gas. The size of the correction is proportional to the difference in the rates.

The invention has several advantages which are worth emphasizing. The flow measurement does not depend on the properties of the gas such as density or viscosity. This is a significant advantage over other flow measurement methods. If gas density and/or viscosity changes in an unknown manner, the invention can still measure the flow accurately. Other flow measurement devices have to be recalibrated.

A second major advantage of the invention is that there are no critical wearing parts. Turbine flowmeters are available which have minimal sensitivity to viscosity and density. In such flowmeters, however, continuous wear can cause frequent recalibrations to be necessary. In the invention, the only component with continuously moving mechanical parts is the inlet valve 15 to the measurement chamber. If the valve actuating mechanism or seal should wear, this will have no effect on the measurement until a leak occurs when the inlet valve was closed.

## Claims

1. A method of determining the volumetric flow rate of a gas flowing in a line and/or of delivering a gas through a line to a point of use at a measured volumetric flow rate comprising:

passing the gas through said line and into and out of a chamber of fixed volume interposed in said line between selected upstream and downstream points;

temporarily restricting flow of the gas in said line at said upstream point, said temporary restriction occupying a selected time interval, improving uniformity of flow rate by flow restriction means at said downstream point; and

measuring the rate of fall of pressure in the portion of said line lying between said upstream and downstream points during at least a portion of the duration of said temporary restriction to obtain a measurement of the volumetric rate of flow, characterised in that the method further comprises:

imposing a desired constant flow rate on said gas at the said downstream point in said line by comparing the measured rate of fall of pressure with a desired rate of fall of pressure and adjusting the flow restriction means in response to any deviation between the desired and measured flow rate.

2. A method in accordance with Claim 1 characterised in that it comprises:

making said measurement of the rate of pressure fall twice during said time of restricted gas flow;

comparing the two measurements; and

correcting said volumetric flow rate determination for gas supercompressibility if said measurements differ upon comparison.

3. A method in accordance with Claim 1 or 2, characterised in that it comprises effecting transfer of heat between the environment and the gas in said line between said upstream and downstream points at least during the time of restricted flow in a direction tending to maintain the temperature of the gas in said line constant.

4. A method in accordance with Claim 1, 2 or 3 characterised in that said temporary restriction of gas flow is a complete interruption of flow.

5. A method in accordance with any preceding claim, characterised in that the measurement of said rate of pressure fall is determined by measuring the time required for the pressure to fall from one selected value to another lower selected value.

6. A method in accordance with any of Claims 1 to 4, characterised in that the measurement of said rate of pressure fall is determined by measuring the pressure at the beginning and end of a selected time interval, subtracting the lesser pressure from the larger pressure, and dividing the difference by said selected time interval.

7. A method in accordance with any preceding claim, characterised in that a uniformity of flow rate throughout a measurement cycle at said downstream point in said line is imposed by bringing said gas to a uniform pressure at said downstream point and delivering it into and through a flow restriction farther downstream of said downstream point.

8. A method in accordance with any preceding claim, characterised in that said temporary restriction of gas flow at an upstream point in said line is effected by closing a valve means in said line at said upstream point for a selected time.

9. A method in accordance with any preceding claim wherein said temporary restriction is repeated at selected times.

10. Apparatus for determining the volumetric flow rate of a gas flowing in a line and/or for delivering gas through this line to a point of use at a measured volumetric flow rate comprising:

flow restriction means (12, 13) for improving uniformity of flow rate on said gas at a downstream point in said line (11);

upstream valve means (15) for temporarily restricting gas flow in said line at an upstream point;

a chamber of fixed volume interposed in said line between said upstream and downstream points;

means (16) for measuring the rate of pressure fall in said line downstream from said upstream point during at least part of the time said gas flow is restricted by said upstream valve means (15), characterised in that the apparatus further includes means (17) for comparing the measured rate of pressure fall with a desired rate of pressure fall and in that the means for improving uniformity of flow rate is able to establish and maintain a constant flow rate by adjusting the volumetric flow rate downstream from the means (16) for measuring the rate of pressure fall in said line in response to any deviation between a desired and the measured flow rate.

## Patentansprüche

1. Verfahren zum Bestimmen des Volumenflusses eines in einer Leitung flidßenden Gases und/oder zur Förderung eines Gases durch eine Leitung zu einem Bestimmungspunkt mit einem abgemessenen Volumenfluß, wobei das Gas durch eine Leitung in und aus einer Kammer bestimmten Volumens strömt, welche zwischen ausgewählten stromab- und stromaufgelegenen Punkten in die Leitung eingeschaltet ist, wobei der Gasstrom in der Leitung am stromaufgelegenen Punkt zeitweise behindert wird und diese Behinderung ein bestimmtes Zeitintervall andauert und die Gleichförmigkeit des Durchflusses durch eine Behinderung des Stromes am stromabgelegenen Punkt erfolgt und die Druckabfallgeschwindigkeit in der Leitung zwischen dem stromauf- und dem Stromabgelegenen Punkt zumindest während eines Teiles des Zeitraumes der zeitweisen Behinderung gemessen wird, um den Volumenstrom zu bestimmen, dadurch gekennzeichnet, daß am stromabgelegenen Punkt in der Leitung ein gewünschter konstanter Volumenstrom des Gases erzeugt wird, indem die gemessene Druckabfallgeschwindigkeit mit der gewünschten Druckabfallgeschwindigkeit verglichen wird und die Strombehinderungseinrichtung in Abhängigkeit von den Anweichungen zwischen dem gewünschten und dem gemessenen Volumenstrom eingestellt wird.

2. Verfahren nach Anspruch 1, dadurch gekennzeichnet, daß die Messung der Druckabfallgeschwindigkeit zweimal während der Behinderung des Gasstromes erfolgt und beide Messungen miteinander verglichen werden und die Volumenstrommessung bezüglich der Superkompressibilität korrigiert wird, falls beide Messungen beim Vergleich differieren.

3. Verfahren nach Anspruch 1 oder 2, dadurch gekennzeichnet, daß ein Wärmeaustausch zwischen der Umgebung und dem Gas in der Leitung zwischen dem stromauf- und stromabgelegenen Punkt mindestens während der Strombehinderung erfolgt, um die Temperatur des Gases in der Leitung konstant zu halten.

4. Verfahren nach Anspruch 1, 2 oder 3, dadurch gekennzeichnet, daß die zeitweise Behinderung des Gasstromes eine völlige Stromunterbrechung ist.

5. Verfahren nach einem der vorausgehenden Ansprüche, dadurch gekennzeichnet, daß die Messung der Druckabfallgeschwindigkeit durch Messung der Zeit erfolgt, in welcher der Druck von einem bestimmten Wert auf einen anderen tiefergelegenen Wert abfällt.

6. Verfahren nach einem der Ansprüche 1 bis 4, dadurch gekennzeichnet, daß die Druckabfallgeschwindigkeit durch Messung des Druckes am Anfang und am Ende des bestimmten Zeitintervalls erfolgt und der geringere Druck vom höheren Druck subtrahiert und die Differenz durch das bestimmte Zeitintervall dividiert wird.

7. Verfahren nach einem der vorausgehenden Ansprüche, dadurch gekennzeichnet, daß eine Gleichförmigkeit des Durchflusses während eines Meßzyklusses am stromabgelegenen Punkt der Leitung erreicht wird, indem das Gas am stromabgelegenen Punkt auf einen gleichförmigen Druck gebracht und das Gas durch eine weiter stromabgelegene Verengung geleitet wird.

8. Verfahren nach einem der vorausgehenden Ansprüche, dadurch gekennzeichnet, daß die zeitweise erfolgende Behinderung des Gasstromes an einem stromaufgelegenen Punkt der Leitung durch Schließen eines in der Leitung stromaufgelegenen Ventils während einer bestimmten Zeitdauer erfolgt.

9. Verfahren nach einem der vorausgehenden Ansprüche, dadurch gekennzeichnet, daß die zeitweise Behinderung zu bestimmten Zeiten wiederholt wird.

10. Vorrichtung zur Bestimmung des Volumenflusses eines Gases in einer Leitung und/oder zur Förderung eines Gases zu einem Bestimmungspunkt mit abgemessenen Volumenfluß, wobei an einem stromabgelegenen Punkt der Leitung (11) Strombehinderungseinrichtungenen (12, 13) zur Erhöhung der Gleichförmigkeit des Gasflusses vorgesehen und stromauf Ventileinrichtungen (15) zur zeitweisen Behinderung des Gasflusses in der Leitung angeordnet sind und zwischen den stromauf- und stromabgelegenen Punkten eine Kammer mit festem Volumen in die Leitung eingeschaltet ist, wobei Einrichtungen (16) vorgesehen sind zur Messung der Druckabfallgeschwindigkeit unterhalb des stromaufgelegenen Punktes zumindest während der Zeit, in welcher der Gasfluß durch die stromaufgelegenen Ventileinrichtungen (15) behindert ist, dadurch gekennzeichnet, daß Einrichtungen (17) zum Vergleich der gemessenen Druckabfallgeschwindigkeit mit der gewünschten Druckabfallgeschwindigkeit vorgesehen sind und die Einrichtungen zur Verbesserung der Gleichförmigkeit des Volumenflusses so ausgebildet sind, daß eine konstante Durchflußgeschwindigkeit durch Einstellung des Volumenflusses stromunterhalb der Einrichtung (16) erreicht und aufrecht erhalten wird, um die Druckabfallgeschwindigkeit in der Leitung in Abhängigkeit von den Abweichungen zwischen gewünschter und gemessener Flußrate zu bestimmen.

**Revendications**

1. Procédé pour déterminer le débit volumétrique d'un gaz s'écoulant dans une conduite et/ou pour envoyer un gaz par une conduite à un point d'utilisation avec un débit volumétrique mesuré, comportant:

le passage du gaz dans ladite conduite, son introduction dans une chambre de volume fixé intercalée dans ladite conduite entre des points amont et aval sélectionnés et l'extraction du gaz de ladite chambre,

la limitation temporaire de l'écoulement du gaz dans ladite conduite audit point amont, ladite limitation temporaire occupant un intervalle de temps sélectionné, l'amélioration de l'uniformité du débit par un moyen de limitation de l'écoulement audit point aval; et

la mesure de la vitesse de chute de pression dans la partie de ladite conduite se trouvant entre lesdits points amont et aval pendant au moins une partie de la durée de ladite limitation temporaire pour obtenir une mesure du débit volumétrique, caractérisé en ce que le procédé comporte en outre:

l'imposition d'un débit constant désiré audit gaz audit point aval dans ladite conduite en comparant la vitesse de chute de pression mesurée à une vitesse de chute de pression désirée et en réglant les moyens de limitation d'écoulement en fonction de tout écart entre le débit désiré et le débit mesuré.

2. Procédé selon la revendication 1, caractérisé en ce qu'il comporte:

l'exécution de ladite mesure de la vitesse de chute de pression deux fois pendant ladite durée de la limitation de l'écoulement de gaz,

la comparaison des deux mesures, et

la correction de ladite détermination du débit volumétrique pour tenir compte de la supercompressibilité du gaz si lesdites mesures diffèrent lors de la comparaison.

3. Procédé selon la revendication 1 ou 2, caractérisé en ce qu'il comporte l'exécution d'un transfert de chaleur entre l'ambiance et le gaz dans ladite conduite entre ledit point amont et ledit point aval au moins pendant la durée de l'écoulement limité dans un sens tendant à maintenir la température du gaz constante dans ladite conduite.

4. Procédé selon la revendication 1, 2 ou 3, caractérisé en ce que ladite limitation temporaire de l'écoulement du gaz est une interruption complète de l'écoulement.

5. Procédé selon l'une quelconque des revendications précédentes, caractérisé en ce que la mesure de ladite vitesse de chute de pression est déterminée par la mesure du temps nécessaire pour que la pression tombe d'une valeur sélectionnée à une autre valeur sélectionnée plus faible.

6. Procédé selon l'une quelconque des revendications 1 à 4, caractérisé en ce que la mesure de ladite vitesse de chute de pression est déterminée par la mesure de la pression au début et à la fin d'un intervalle de temps sélectionné, en retranchant la pression la plus basse de la pression la plus grande et en divisant la différence par ledit intervalle de temps sélectionné.

7. Procédé selon l'une quelconque des revendications précédentes, caractérisé en ce que l'uniformité du débit au cours d'un cycle de mesure audit point aval dans ladite conduite est imposée en amenant ledit gaz à une pression uniforme audit point aval et en l'envoyant dans et à travers une rétrécissement d'écoulement plus en aval dudit point aval.

8. Procédé selon l'une quelconque des revendications précédentes, caractérisé en ce que ladite limitation temporaire de l'écoulement du gaz en un point amont dans ladite conduite est effectuée en fermant pendant un temps sélectionné un moyen à vanne dans ladite conduite audit point amont.

9. Procédé selon l'une quelconque des revendications précédentes, dans lequel ladite limitation temporaire est répétée à des intervalles de temps sélectionnés.

10. Dispositif pour déterminer le débit volumétrique d'un gaz s'écoulant dans une conduite et/ou pour envoyer un gaz par cette conduite à un point d'utilisation à un débit volumétrique mesuré, comportant:

un moyen de limitation d'écoulement (12, 13) pour améliorer l'uniformité du débit dudit gaz en un point aval dans ladite conduite (11);

un moyen à vanne amont (15) pour limiter temporairement l'écoulement du gaz dans ladite conduite en un point amont;

une chambre de volume déterminé intercalée dans ladite conduite entre ledit point amont et ledit point aval;

un moyen (16) pour mesurer la vitesse de chute de pression dans ladite conduite en aval dudit point amont pendant au moins une partie de la durée pendant laquelle ledit écoulement du gaz est limité par ledit moyen à vanne amont (15), caractérisé en ce que le dispositif comporte en outre un moyen (17) pour comparer la vitesse mesurée de chute de pression à une vitesse désirée de chute de pression, et en ce que le moyen pour améliorer l'uniformité du débit est capable d'établir et de maintenir un débit constant par réglage du débit volumétrique en aval du moyen (16) pour mesurer la vitesse de chute de pression dans ladite conduite à la suite de tout écart entre un débit désiré et le débit mesuré.

FIG. 1

FIG. 2

FIG. 3

1